# EUROPEAN PATENT APPLICATION

(11) **EP 4 570 934 A1**
(43) Date of publication of application: **18.06.2025**
(21) Application number: 23216219.8
(22) Date of filing: 13.12.2023
(51) Int. Cl.: C22B 26/12, B03D 1/02, C01B 32/215, C01D 15/08, H01M 10/54

(54) **LITHIUM AND GRAPHITE RECYCLED FROM BLACK MASS**

(71) Applicant: tozero GmbH, 80639 Munich (DE)
(72) Inventor: MILICEVIC NEUMANN, 80639 München (DE); GAMARRA GARCIA, Jorge Daniel, 80639 München (DE)
(74) Representative: Eisenführ Speiser

(57) **Abstract**

The present invention relates to a composition comprising lithium carbonate obtained from black mass. The composition can be obtained by a process comprising (i) mixing black mass with a liquid to provide black mass slurry; (ii) converting lithium into a lithium salt in and removing graphite from the black mass slurry of step (i); (iii) separating dissolved lithium carbonate from solids in the black mass slurry of step (ii) to provide a lithium-enriched liquid fraction and a lithium-depleted solid fraction; optionally, reducing the lithium salt in the lithium-enriched liquid fraction of step (iii) to provide elementary lithium; (v) optionally, purifying the lithium salt in the lithium-enriched liquid fraction of step (iii) or the elementary lithium of step (iv); and (vi) optionally, solidifying the lithium salt of step (iii) or (v) or the elementary lithium of step (iv) or (v).

## Description

### Technical field of the invention

The present invention relates to recycling of lithium-ion batteries, and in particular to a composition comprising lithium obtained from black mass by recycling.

### Background of the invention

Yearly a 30% increase of end-of-life lithium-ion battery is observed. The lithium-ion battery waste in Europe is expected to exceed 1 million tons by 2030.

Lithium-ion batteries are composed of valuable metals such as lithium, copper, manganese, cobalt, and nickel. Once a battery reaches the end of life, the battery pack can be collected, dismantled, and shredded. The shredded material is then processed to produce so-called "black mass", which contains cathode and anode material, high amounts of lithium, manganese, cobalt, and nickel. Black mass makes up about 40 to 50% of the total weight of an electric vehicle (EV) battery. The typical black color is due to the high concentrations of graphite contained in the anodes of batteries, which has a very dark black color.

There are two main processes to produce black mass. One of them is thermal treatment of end-of-life batteries during which the deactivation of the batteries and evaporation of electrolyte is happening. After this step the shredding is conducted with subsequent mechanical separation of metals from "black mass". Another way is to discharge the batteries and perform shredding under inert atmosphere or water after which evaporation of electrolyte and mechanical separation of metals from "black mass" is done. Obtained "black mass" can be further processed typically through two methods: pyro- and hydrometallurgy. Pyrometallurgy uses high temperatures to burn off unwanted materials like plastics and remaining electrolyte, requiring high energy consumption. This can create hazardous emissions and waste that must be captured or mitigated, and result in losses of lithium, graphite and manganese and generally less recovered material. Hydrometallurgy uses water based solutions to separate the valuable materials from black mass. This eliminates the need for polluting furnaces and energy intensive processing, creating a lower-carbon black mass.

The exact composition of black mass can vary considerably based on a number of factors, such as the specific source and recycling method used, the age and condition of the batteries being recycled, as well as the efficiency of the production process. Currently, the most popular types of lithium-ion batteries in the world incorporate significant amounts of nickel, cobalt, lithium, and manganese - so black mass produced today will typically have varying concentrations of each.

A sample black mass composition could include (% by weight) Lithium compounds: 2-6%; cobalt: 5-20%; nickel: 5-15%; copper: 3-10%; aluminum: 1-5%; iron: 1-5%; manganese: 2-10%; remainder: graphite, with iron, aluminum and copper flakes. These critical materials can be extracted from the black mass and re-used in new battery production.

The ability to recycle these metals and "close the loop" on their life cycle will directly impact the need for virgin materials, while simultaneously reducing the carbon footprint required for new mining activities. As a result, environmentally sustainable and economically viable recycling technologies are becoming a critical focus area as the global demand for battery manufacturing grows.

The object to be achieved by the present invention is to provide novel, valuable compositions recovered from black mass. This, and other objects which will become apparent from the following, are accomplished by means of the present invention as defined in the accompanying claims.

### Summary of the Invention

In a first aspect, the present invention concerns a process comprising the following steps:
(i) mixing black mass with a liquid to provide a black mass slurry;
(ii) converting lithium into a lithium salt in and removing graphite from the black mass slurry of step (i);
(iii) separating dissolved lithium salt from solids in the black mass slurry of step (ii) to provide a lithium-enriched liquid fraction and a lithium-depleted solid fraction;
(iv) optionally, reducing the lithium salt in the lithium-enriched liquid fraction of step (iii) to provide elementary lithium;
(v) optionally, purifying the lithium salt in the lithium-enriched liquid fraction of step (iii) or the elementary lithium of step (iv); and
(vi) optionally, solidifying the lithium salt of step (iii) or (v) or the elementary lithium of step (iv) or (v).

The invention is based on the finding that in recycling of batteries, lithium (Li) can be separated early in the process. The early separation of Li increases the recovery rate of Li considerably as compared to the state of the art processes. In the state of the art processes Li is separated in a late step, after separation of graphite, Cu, Fe, Al, Mn, Co and Ni. All these steps contribute to the Li loss through the whole process. Moreover, early separation of Li facilitates subsequent separation of graphite, Cu, Fe, Al, Mn, Co and Ni in an efficient manner.

The liquid in step (i) comprises primarily water. Further components that may be contained become apparent from the following. The black mass (BM) is from lithium-ion batteries and is composed of at least graphite, lithium (Li) and further metals such as copper (Cu), iron (Fe), aluminum (Al), manganese (Mn), cobalt (Co) and nickel (Ni). A preferred black mass is from NMC type lithium-ion batteries (LIBs).

The process of the invention may comprise pre-treatment of the BM. Preferred pre-treatment methods include pyrolysis, ultrasound treatment, wet milling and strong stirring. They can be conducted before, after or as part of step (i). Moreover, in step (ii) a Li-enriched liquid phase and a Li-depleted solid phase is formed, and in step (iii) the Li-enriched liquid phase is separated from the Li-depleted solid phase in corresponding fractions.

Slurry preparation from step (i) is preferably carried out in an agitated tank reactor, preferably in a stirred tank reactor (STR), in which the BM and the liquid, preferably water, are introduced and mixed to form a BM slurry. The term BM slurry denotes the mixture comprising the liquid and constituents from the BM dissolved and/or dispersed therein. It is further preferred that step (i) is carried out in the same tank reactor in which the subsequent step is conducted.

According to a preferred embodiment of the present invention, the conversion into the Li salt in step (ii) involves carbonation. Carbonation converts solid, hardly soluble, Li oxides into a soluble Li carbonate salt. Because Li is more reactive than other metals (mainly transition metals like Ni, Co) in black mass, Li is preferentially brought into solution. In the black mass hydrometallurgical chain according to the present invention, early removal of Li eliminates the need for Li removal in later steps and improve the overall recovery rates of Li as it prevents co-extraction at various stages, as seen in the prior art processes.

Carbonation may be conducted in a tank reactor in which CO₂ containing gas (especially air and/or CO₂) is introduced. Preferably the gas is guided through the BM slurry from the bottom towards the top of the tank reactor. Various parameters may have an influence on the carbonation efficiency. These parameters are discussed in the following:
Agitation aims at dispersing the CO₂ containing gas in BM slurry. Agitation preferably means stirring. A propeller efficiently facilitates gas dispersion. The propeller is preferably arranged close to the inlet through which the CO₂ containing gas is introduced into the BM slurry. The optimal stirring speed may be selected depending on the geometry and size of the tank and the design of the stirrer. It may further be adapted to the particle size of the particles in the BM slurry. In the embodiments described herein, the stirring speed ranges from 50 rpm to 5000 rpm, preferably from 200 to 1000 rpm.

In the BM slurry, the mean particle size may range between 5 µm and 2 mm, preferably 10 µm and 500 µm, more preferably 20 to 300 µm. The smaller the particle size the faster the reaction rate and the less likely that Cu and Al from foils that may hinder the extraction of Li are present.

The duration of carbonation is preferably at least 10 minutes, preferably at least 30 minutes, more preferably at least 1 hours, yet more preferably at least 2 hours, most preferably at least 3 hours, and/or at most 24 hours, preferably at most 12 hours, more preferably at most 8 hours, most preferably at most 6 hours. It has been unexpectedly found that gassing the BM slurry for several minutes (e.g. 10 minutes) with air leads to dissolution of up to 70% of the lithium. However, the carbonation reaction rate then declines so that it requires a few hours until almost all of the lithium has dissolved. These observations suggest that carbonation is a two-step mechanism. The first involves leaching of the BM slurry in the absence of externally added CO₂ under high shear mixing. The phrase "absence of externally added CO₂" means that the BM slurry is not actively gassed with CO₂ containing gas, but that any CO₂ that may be present in the slurry is due to surrounding air. Therefore, in a first step the BM slurry may be first stirred in the absence of CO₂, for instance for 1 minute to 4 hours, preferably 5 minutes to 1 hour, more preferably 10 minutes to 30 minutes. The second, slower, step is a three-phase reaction that ultimately results in LiHCO₃, and first requires CO₂ to be dissolved in the slurry. This dissolution step may take longer and may be monitored via determining CO₂ or HCO₃⁻ formation in the slurry, e.g., on the basis of oxidation reduction potential (ORP) and/or conductivity.

Reactor fill level denotes the actual filling volume of the reactor with slurry relative to the maximum reactor volume. Because the CO₂ containing gas is preferably fed from the bottom of the reactor, its residence time in the slurry increases with increasing reactor fill level. Consequently, CO₂ has more time to dissolve in the slurry. On the other hand, if the reactor fill level is low, the CO₂ containing gas has a low residence time and little time to dissolve in the slurry. A good compromise between recovery rate, processing requirements and costs is achieved with a reactor fill level that is preferably at least 60%, preferably at least 65%, more preferably at least 70%, yet more preferably at least 75%, yet more preferably at least 80%, most preferably around 85% of the reactor.

In addition, diverse feeding systems for the CO₂ may provide better gas distribution in solution than conventional systems due to better dispersion of the bubbles of gas, increasing the surface to volume ratio of the introduced gas bubbles and thus improving the contact area between the gas and the slurry. Herewith is the rate and/or efficiency of carbonation improved.

Solubility of CO2 in water decreases with increasing temperature, and LiHCO3 may decompose at high temperatures. However, rates of reaction increase with increasing temperature. Therefore, the temperature during carbonation preferably ranges from 50 to 90°C, more preferably from 60 to 85°C, most preferably from 70 to 80°C.

Solid-liquid (SL) ratio is preferably at least 10gpl (grams per liter), preferably at least 30 gpl, more preferably at least 50 gpl, most preferably at least 70 gpl and/or at most 200 gpl, preferably at most 150 gpl, more preferably at most 120 gpl. The SL ratio refers to the solid concentration in the carbonation reactor. The recovery rate typically decreases as the solid concentration increases because the bulk diffusion resistance increases at the solid-liquid boundary layer. Furthermore, the surface area of contact decreases between the liquid and solid phases.

The CO₂ flow rate is preferably set to lowering of the pH of the solution, preferably by a change of 3 units per hour, more preferably 1 unit per hour. The CO₂ flow rate is given in relation to CO₂. This means, for example, if air is used in carbonation, the air flow rate is much higher. As the CO₂ flow rate increases, the Li₂CO₃ dissolution increases. This is because the volumetric mass transfer coefficient of the gas-liquid phase increases. Furthermore, at high CO₂ flow rates, there is more interfacial turbulence, which weakens the interfacial tension, breaking the boundary layer and increasing the mass transfer coefficient.

The pH value of the BM slurry during carbonation preferably ranges from 7 to 11. It is not necessary to control the pH value during carbonation, but it may float responsive to the amount of dissolved CO₂. Alternatively, the pH value may be adjusted to and/or controlled within a range of 7 to 11.

According to a preferred embodiment of the invention, the removal of graphite in step (ii) involves flotation, preferably froth flotation. Flotation is a physical-chemical process used to separate materials from a mixture. Specifically, it is a technique for separating materials by exploiting the differences in their wetting properties and buoyancy in a liquid medium, typically water, with the aid of gas, typically air, bubbles. It is commonly used in various industries, including mining, water treatment, and the recycling of materials. The process typically involves the following steps: The material to be separated, such as ore, is crushed and ground into a fine powder. It is then mixed with water and chemicals to create a slurry. Air is introduced into the slurry in the form of small bubbles. These bubbles attach themselves to the desired particles or materials to be separated. The buoyant force of the air bubbles causes the particles to rise to the surface of the slurry, forming a froth layer. The froth layer can be skimmed off to separate the desired material from the rest of the slurry. The froth, which contains the separated material, is collected and removed, leaving behind the unwanted particles in the slurry.

Different chemicals, known as collectors and frothers, may be added to the slurry to enhance the separation process by making certain minerals more responsive to the flotation process. In the present case, the flotation aims to separate hydrophobic and hydrophilic fractions of the slurry. Here, a gaseous carrier, typically air, is introduced into the slurry in the form of bubbles. Hydrophobic particles adhere to the bubbles and get carried with them to the top where a froth forms. This froth containing only the hydrophobic particles can then be separated while hydrophilic particles stay inside the liquid. This enables the removal of only specific particles from the slurry. To increase the hydrophobicity and hydrophilicity of the particles, surfactants can be added. In the process of the invention, flotation aims at separation of graphite from the BM slurry. Advantageously, the early separation of graphite from the cathode active material improves the efficiency of the subsequent refinement steps, which can be employed to recover not only Li, but also Ni, Co, Mn, Cu and Al. Moreover, graphite is also a critical raw material as defined by the European Commission. Thus, from an economic point of view, the price of technical to battery grade graphite makes its recycling commercially viable, given that the graphite content in LIBs can range between 13.8 to 22% by weight.

Therefore, another advantage of the flotation step is that it allows recycling graphite from the BM slurry. The morphology of the recovered graphite in this manner can be superior to graphite recovered after applying strong acids, as strong acids may compromise the layered structure of the graphite particles, making it an unfavorable material for further anode production use.

Specifically, in the process of the invention, the flotation separates in a flow cell different minerals in the BM slurry on the basis of their surface hydrophobic differences. Because natural graphite and pure Li Ni Mn Co oxides (so-called NMC particles) have significant wettability differences, flotation is suitable for the separation of NMC from graphite.

Preferably, the graphite separated by flotation is spherical and has a size (mean diameter) ranging from 10 to 25 µm, as determined by scanning electron microscopy and sieve analysis, respectively. These characteristics make the separated graphite suited for battery use (i.e. battery grade graphite).

A preferred flotation cell is composed of multiple units, running with slightly different parameters. First, a rougher unit makes an initial separation of graphite in the form of froth from the black mass feed, leaving out the tailings. The tailings are then fed into a scavenger unit that makes a second separation from the gangue. Finally, the collected froths are mixed back into a cleaning unit where the final separation occurs and high purity graphite is obtained. The tailings of each flotation step may be fed back into the process for improved lithium recovery.

Pulp density refers to the amount of solids in the feed. Typically, this property is considered independent of flotation rate and it only affects residence time. Nevertheless, lower % solids may result in faster flotation rates with a particular correlation with particle size. Coarse particles (+208 micron) may be more significantly affected.

Collectors are amphiphilc compounds having both a polar and apolar group. Their function is to enhance the hydrophobicity of the target mineral and improve its floatability. Preferred collectors for graphite recovery are diesel, kerosene and paraffin, as well as ionic collectors like potassium xathantates. Their overall performance is connected to dosing and general affinity. In the case of collectors with low water solubility, emulsification can also be used to improve their performance. The most preferred collector is kerosene.

Frothers are non-ionic compounds with a polar head and an apolar tail that are designed to stabilize the froth and restrict the amount of gangue, the undesired fraction, entrained into it. Frothers promote bubble formation and improve the foam stability by adsorbing on air and water based on polarity. They are essential to the flotation of graphite, which would naturally rest on top of the water if it is unoxidized and uncontaminated. Alcohols, alkoxy paraffin, polyglycols and ethers can all be used for the separation of graphite, whereas the most preferable ones are polyglycol and ketones.

Activator refers to those chemical compounds that remove hydrophilic groups from the surface of the desired material improving its floatability. Thermal pre-treatment and Fenton reagent, a mix of iron sulfate (II) and hydrogen peroxide, may improve the floatability of graphite from LiBs. Additionally, H-acid (8-amino-1-naphthol-3,6-disulfonic acid) can be used to activate the flotation of lithium iron phosphate, LiFePO₄.

Depressants or inhibitors are compounds that inhibit the flotation of gangue minerals. Graphite can be depressed using sodium silicate, calcium hydroxide or sodium sulphite. Siliceous gangue i.e. from silicon anodes in the LiB case can be depressed using sodium cyanide. Organic depressants such as dextrin, starch and tannic acid, can stabilize the pulp due to their steric effects. Preferred flotation processes are conducted in the absence of a depressant.

Froth recovery is the main metric of performance in the froth zone and it refers to the fraction of material that enters the froth and is recovered as concentrate. It depends on the froth retention time (FRT). FRT is a measure of the average froth residence time; it is calculated as the ratio of froth volume to the concentrated volumetric flow rate. Preferred FCRs are 0.8 to 1.5 t/m²h for the rougher unit, 0.3 to 0.8 t/m²h for the scavenger unit and 1.0 to 2.0 t/m²h for the cleaner unit.

The size of the particles fed into the unit is an important parameter for flotation. Separation relies on the probability/ability of the particle being attached to the bubble after collision, depending on its hydrophobicity. Higher particle sizes may increase the chance of collision with the bubble but due to its relative size, they are also more likely to detach and go back into the pulp. Thus, in preferred floatation processes the particle size ranges from 10 to 1000 µm, preferably 50 to 500 µm.

The temperature during flotation may be ambient temperature. That is, no measures for temperature control are used, but the flotation cell is in equilibrium with the environment. Temperature is a major parameter as every material component of the solution has a particular response to it. Water and the hydrocarbons typically used as collectors have a viscosity response to temperature. Lower viscosity means higher mobility and easier separation of the fractions by weight. However, temperature control is costly. Therefore, in certain embodiments ambient temperature is preferred. In other embodiments, the process is conducted at an elevated temperature, such as 40° or more, preferably 50° or more, more preferably 60°C or more, and/or 100°C or less, preferably 90°C or less, more preferably 80°C or less, most preferably between 60 and 80°C.

Preferred flotation processes are carried out at pH 7 to 11, preferably pH 8 to 10, more preferably pH 8.5 to 9.5. The exact mechanism by which it acts to influence the flotation process is not completely understood, as it can relate to the destabilizing of the collector or effects it has on the surface chemistry of gangue. The most preferred pH for the recovery of graphite is 9. The pH can be controlled by the addition of a base during the conditioning step.

Airflow rate can change and affect the formation and stability of bubbles. Excessive flow can have negative effects as the froth loses stability and less material is entrained in the froth. On the other hand, low flows result in slower kinetics. Airflow rate affects parameters like froth retention time, bubble surface area. In the process of the present invention, a preferred airflow rate during flotation ranges from 10 to 50 L/min.

Feed rate refers to the rate at which the conditioned pulp, meaning the pulp that has been properly mixed into the reactor and is in contact with both collector and frother is fed into the flow cell, it has an effect on retention times and water recovery rates as the system has increased volume and lower froth depths. This parameter is typically fixed around a desired froth depth. This froth depth is also connected to chemical composition and airflow rates among others.

However, the surface of the electrode active material particles may be covered with organic substances that originated from the used electrolyte in the battery system, which may make the wettability difference between the cathode active material and the graphite particle surfaces very similar and thus reduces the separation efficiency of the flotation. Therefore, for an optimal performance of flotation, some of the above parameters should be adapted to the specific BM source, as will be clear to the person skilled in the art.

In step (ii), the conversion into Li salt may be conducted before, after or simultaneously with the removal of graphite. For example, the BM slurry is first conditioned to provide a conditioned BM slurry (conditions pulp). Then the graphite is separated from the conditioned BM slurry, preferably by flotation. Afterwards, the remainder of the conditioned BM slurry, preferably the concentrate, is processed by converting the lithium into a soluble salt, preferably its carbonate salt. Conducting both simultaneously may be affected by first conditioning the BM slurry and introducing the conditioned BM slurry to a flotation cell gassed with a CO₂ and/or air. Thereby, the gas can be simultaneously used for floating graphite and carbonizing lithium.

In a preferred embodiment of the invention, step (iii) involves liquid-solid separation, preferably filtration. Thereby, the liquid phase in which the lithium salt is dissolved is separated from the solid phase. The solid phase contains valuable metals thus represents a valuable intermediate product (composition) itself. This intermediate product can be further processed to recover valuable metals therefrom, as described herein further below. The liquid phase contains the lithium as salt, and can be used directly, or further processed to recover the lithium as a solid salt or in elementary form.

According to an optional step of the process of the invention, dissolved Li salt, i.e. ionic Li, is reduced to provide elementary Li (step (iv)). To this end, electrowinning may be carried out. In electrowinning an electric current is passed through the solution. The Li ions are reduced, and the elementary Li is deposited.

Optionally, the Li salt in the lithium-enriched liquid fraction of step (iii) or the elementary lithium of step (iv) is purified to the desired grade (step (v). Purification may include high pressure membrane filtration processes (nanofiltration and/or reverse osmosis), adsorption, ion exchange, various electrochemical methods, and/or other established methods in water treatment (for example using activated carbon filtration to remove any residual solids or organics present from the BM or flotation). Depending on the specific stream composition, mainly stemming from the type of BM used as feed in the process, one or more of the above mentioned processes can be used for purposes of purification. These methods can be used either to remove impurities from the Li-rich stream (size and charge exclusion with high pressure membrane filtration, selective removal of ions using ion exchange resins, selective precipitation), or to selectively concentrate and recover higher purity Li for subsequent solidification (ion exchange, solvent extraction). Nanofiltration is considered a baseline purification step due to its continuity in operation and well established presence on the market.

Another optional process step is step (vii), the solidification of the Li salt of step (iii) or (v) or the elementary Li of step (iv) or (v). This step may involve precipitation, preferably crystallization or electrolysis respectively. Thereby, the dissolved Li salt or the elementary Li is solidified out of the liquid phase. Separation of the liquid phase from the solid phase yields the Li as solid salt or in solid elementary form. The solidification of Li can in itself be considered a purification step, depending on the profile of any remaining impurities present in the stream with Li, due to generally low solubility of Li salts and their high relative concentration in comparison to any present impurities, due to the nature of the selective Li extraction process presented within this document.

According to a further embodiment of the present invention, the Li-depleted solid fraction provided in step (iii) is processed to recover or separate at least one, at least two, at least three, at least four, or all of the metals selected from the group consisting of Co, Ni, Cu, Al and Fe. The main problem of recycling batteries is separation of minerals from each other.

Leaching is often the first step of a hydrometallurgical recycling process. Here typically an acidic solution (e.g., sulfuric acid in water) with additives (e.g., hydrogen peroxide) is used to convert the valuable black mass materials to ions in solution. This process is influenced by a lot of factors, like the composition of the black mass, the choice of acid, the particle size of the solid or the reaction conditions (temperature, pH). Afterwards the ions in solution are further processed to separate and retrieve each component individually. The leaching can be conducted at 90 °C and 1 atm conditions. Sulfuric acid and oxygen are preferably fed to the leaching reactor after which the slurry is filtered to obtain filter cake and so-called pregnant liquor solution (PLS).

After leaching, most valuable materials are prevalent as ions in the PLS. Due to the complexity of the PLS, several techniques are preferably applied to retrieve the valuable metals. The techniques preferably include solvent extraction, electrowinning, cementation, ion exchange, crystallization and precipitation.

Although Co, Ni, Li can be generally considered as main products, Al, Cu and Fe may be obtained as well depending on their concentration in the main stream. Cu, Al and Fe interfere with the subsequent purification of high value metals. Therefore, Cu, Al and Fe are removed before Ni, Mn and Co are recovered.

There are different methods to remove Cu from solution, i.e. pregnant liquor solution (PLS): Cementation is the most preferred method in the context of the present invention. Cementation involves reduction and precipitation of Cu from the PLS with Fe. In cementation, the nobler metal ion in the solution is reduced and precipitated adding less noble metal to solution. In this method the metal that is resisted from solution is called "cement" and the other one that is less noble is called cementator. In this process, the metal that is nobler is precipitated using the metal that is less noble. Then the precipitate is separated from the solution.

Preferred cementation methods are conducted in a range from 20 to 80°C, preferably 30 to 70°C, more preferably 40 to 60°C. The temperature possesses a critical role in Cu cementation. The lower the temperature, the longer it takes to reach the activation energy to start the reaction. At around 60 °C, the copper cementation rate is optimal. When exceeding that temperature, the energy is preferentially used for the dissolution of Fe, which would increase the amount of free Fe in the solution and would cause a high burden in the Fe removal circuit later.

It is further preferred that the reaction time ranges from 5 to 60 minutes, preferably from 1 to 30 minutes, more preferably from 10 to 20 minutes. Reaction time denotes the time provided for the Cu to completely react and cement out of the solution. Longer times ensure that the Cu cementation is closer to 100%. However, allowing the reaction to run for too long (e.g beyond 15-20 min) will cause the dissolution of unreacted Fe ions in an acidic environment and increase the impurities in the solution.

Cementation is preferably carried out at a pH of 0.5 to 2.5, preferably 0.5 to 2.0, more preferably 1.0 to 1.5. When the pH exceeds the upper limit, hydrolysis of Fe ions and precipitation of Fe hydroxides and formation of Fe(lll) compounds occur.

Another method for the removal of Cu from PLS is based on solvent extraction which can be followed by methods like electrowinning. Here, rich Cu solution is subjected to an electrowinning process to obtain high purity copper (e.g., >99 %). Lean copper solution is sent back to the stripping stage. Solvent Extraction is a type of liquid-liquid extraction where two immiscible liquids are first brought into contact enabling an exchange of ions and then separated again. If the ion exchange is favored by a specific ion in solution, it can be extracted with a high selectivity. In Li-ion battery recycling solvent extraction consists of two or optionally 3 steps, extraction, scrubbing and stripping. During the extraction step the aqueous solution containing multiple different ions is contacted in a mixer with an organic solution containing a special extractant. After some time enabling the ions to exchange, the two phases are separated again and ideally the organic phase extracted specific ions completely. This process is then repeated in the stripping step with the resulting organic phase and an acidic solution which extracts the ions again from the organic solution resulting in them being back in an aqueous environment with possibly higher concentration and/or purity. There are many different extractants available with their unique benefits regarding extracting Cu. Selective organics containing aldoxime and ketoxime groups can provide over >99 % recovery in Cu solvent extraction. Solvent extraction may not only be used in Cu recovery (LIX 984+ Acorga M5640), but also in Fe and Al recovery (TBP+DEPHA/TBP for Iron; Cyanex 272 for aluminum).

Ion exchange chromatography can also be used for Cu removal. In ion exchange chromatography the PLS containing the metal to be removed/recovered/separated in ion form passes through a fixed resin bed which absorbs the metal to be removed. The fraction of the PLS flowing through the resin, will be (substantially) free from the absorbed metal. The absorbed metal can then be eluted from the resin, e.g. using strong acidic solution. The eluate is enriched in the absorbed metal and this solution can be further processed by electrolysis to obtain copper metal or crystallized into copper salt.

For the removal of Fe from the PLS, precipitation is the most preferred method. One way to achieve precipitation is by adding a precipitant that reacts with the substance into an insoluble form. Another way is to change the temperature or pH value of the solution such that it becomes supersaturated, and the substance falls out. The newly formed precipitate can then be separated from the solution. This way Fe impurity can be removed from a stream or various cathode metal salts, typically Ni, Co or Mn. Precipitation can also be used for removal of Al from the solution.

Further, Al and Fe may be co-precipitated. Depending on the pH value of the PLS, Al can be precipitated as hydroxide salt. When the pH is then gradually increased between 1.5 and 3.5 by adding hydroxide salt into the PLS, Al and Fe will start co-precipitating.

Further methods to remove Fe include solvent extraction and ion exchange chromatography.

Al is preferably removed by solvent extraction. However, precipitation and ion exchange chromatography are also useful for removing Al.

There are multiple process chains that can be used for NMC recycling depending on the metal or metals of interest, two of which are exemplary described in the following. However, the present invention is not limited to any NMC recycling method.

Co is currently the most critical and highest value metal that can be recycled from Li-ion batteries. Thus its purification could be considered a priority. For the exclusive recovery of Co in the form of CoSO₄, Ni and Mn have to be removed first from the PLS due to the pH selectivity of the extraction solvents. Mn and Co are removed from the PLS into Cyanex 272 at pH 5 leaving a Ni-rich solution. The Organic phase is then stripped into an aqueous phase using H₂SO₄. Mn is removed from the stripped solution using D₂EHPA. Trace amounts of Co can be recovered using Ion exchange resin and fed back into the Mn, Co PLS. Finally, Co is recovered as CoSO₄ (99%) via evaporation to produce low hydration crystals.

Another recycling method focuses on the metals with the highest market value, Co and Ni. The initial steps are those for the purification of Co with an ion exchange column added for the removal of Mn and Co from the Ni-rich solution. The stripped solution can be fed into the Co, Mn stock for further purification. Ni is then recrystallized as sulfate form after stripping.

Another aspect of the present invention relates to a composition comprising Li obtained from black mass. Preferably, the Li is present in elementary form and/or in salt form, preferably as Li carbonate.

In a preferred embodiment, the Li carbonate in the composition has a purity of more than 75 %, preferably more than 98%, more preferably more than 99%, most preferably more than 99.5%.

Preferred composition of the invention further contains at least one, at least two, at least three, at least four, at least five, at least six, at least seven, at least eight, at least nine, at least ten, at least eleven, or all, elements selected from the group consisting of Al, B, Ba, Ca, F, Cu, Fe, K, Mg, Na, P and S. Further, preferred compositions of the invention are free of at least one, at least two, at least three, at least four, at least five, at least six, at least seven, at least eight, at least nine, at least ten, at least eleven, or all, elements selected from the group consisting of Al, B, Ba, Ca, F, Cu, Fe, K, Mg, Na, P and S.

It is further preferred that the amount of Al, if present, in the composition is at least 0.00001%, or at least 0.0001%, and/or at most 0.05%, or at most 0.005%.

It is further preferred that the amount of B, if present, in the composition is at least 0.00006%, or at least 0.0006%, and/or at most 0.01%, or at most 0.001%.

It is further preferred that the amount of Ba, if present, in the composition is at least 0.00002%, or at least 0.0002%, and/or at most 0.01%, or at most 0.001%.

It is further preferred that the amount of Ca, if present, in the composition is at least 0.00005%, or at least 0.0005%, and/or at most 5.4%, or at most 0.54%.

It is further preferred that the amount of F, if present, in the composition is at least 0.00021%, or at least 0.0021%, and/or at most 10%, or at most 1%.

It is further preferred that the amount of Cu, if present, in the composition is at least 0.000002%, or at least 0.00002%, and/or at most 0.1%, or at most 0.01%.

It is further preferred that the amount of Fe, if present, in the composition is at least 0.001%, or at least 0.0001%, and/or at most 0.58%, or at most 0.058%.

It is further preferred that the amount of K, if present, in the composition is at least 0.00003%, or at least 0.0003%, and/or at most 15.7%, or at most 1.57%.

It is further preferred that the amount of Mg, if present, in the composition is at least 0.00001%, or at least 0.0001%, and/or at most 4.7%, or at most 0.47%.

It is further preferred that the amount of Na, if present, in the composition is at least 0.0003%, or at least 0.003%, and/or at most 84%, or at most 8.4%.

It is further preferred that the amount of P, if present, in the composition is at least 0.0004%, or at least 0.001%, and/or at most 0.04%, or at most 0.01%.

It is further preferred that the amount of S, if present, in the composition is at least 0.02%, or at least 0.1%, and/or at most 2%, or at most 0.4%.

Preferred compositions of the invention further contain at least one, at least two, at least three, at least four, at least five, all, elements selected from the group consisting of Ba, Co, Ni, Mn, Si and Zn. Further, preferred compositions of the invention are free of at least one, at least two, at least three, at least four, at least five, or all, elements selected from the group consisting of Ba, Co, Ni, Mn, Si and Zn.

It is further preferred that the amount of Ba, if present, in the composition is at least 0.00005%, or at least 0.0001%, and/or at most 0.005%, or at most 0.001%.

It is further preferred that the amount of Co, if present, in the composition is at least 0.001%, or at least 0.005%, and/or at most 0.1 %, or at most 0.05%.

It is further preferred that the amount of Ni, if present, in the composition is at least 0.000003%, or at least 0.00003%, and/or at most 0.2%, or at most 0.02%.

It is further preferred that the amount of Mn, if present, in the composition is at least 0.000005%, or at least 0.00005%, and/or at most 4%, or at most 0.4%.

It is further preferred that the amount of Si, if present, in the composition is at least 0.00005%, or at least 0.0005%, and/or at most 3%, or at most 0.3%ranges from 0.00005 to 3, preferably 0.0005 to 0.3.

It is further preferred that the amount of Zn, if present, in the composition is at least 0.000004%, or at least 0.00004%, and/or at most 0.01 %, or at most 0.001%.

In a particular preferred embodiment of the invention the composition is obtained by a process as described herein.

A further aspect of the present invention is a composition comprising Co, Ni, Cu, Al and Fe, obtained or obtainable as the Li-depleted solid fraction in step (iii) of the process as described herein.

### Detailed description of the drawings

In the following, the invention is explained in more detail with reference to the drawings, which show:
- Fig. 1: an exemplary process for separating graphite, lithium and metals from black mass.
- Fig. 2: an exemplary process for separating graphite, lithium and metal enriched fractions from black mass.
- Fig. 3: processing of the lithium enriched fraction for recovery of lithium in the form of solid lithium carbonate.
- Fig. 4: processing of the graphite enriched fraction for recovering graphite.
- Fig. 5: leaching of the metal enriched fraction.
- Fig. 6: an exemplary copper recovery step.
- Fig. 7: an exemplary iron recovery step.
- Fig. 8: an exemplary aluminum recovery step.
- Fig. 9: an exemplary nickel recovery step.
- Fig. 10: exemplary cobalt and manganese recovery steps.

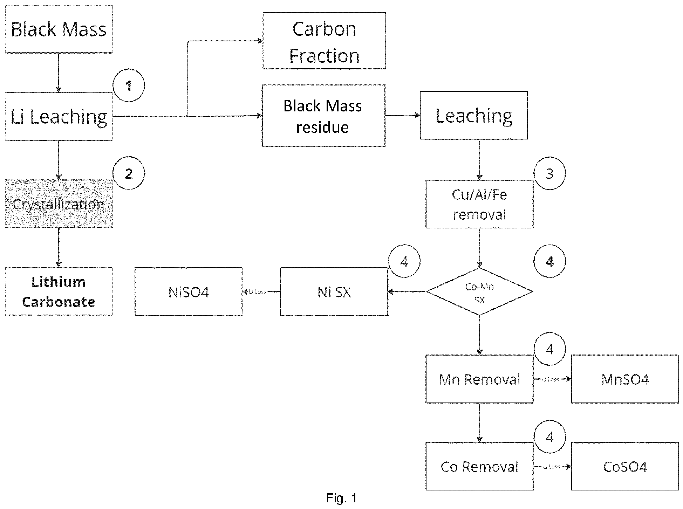

The primary input in the exemplary process is black mass (BM). This comes from lithium batteries (LIBs) that have been treated and primarily consists of cathode active material like (LiNiₓMn_{y}Co_{1-x-y}O₂) and anode active materials like graphite/silicon. However, BM can also contain Al and Cu from foil. As shown in Fig 1, the black mass undergoes Li leaching. Thereby, insoluble Li is converted into a soluble Li salt by carbonation. The Li carbonate is crystallized to yield solid Li carbonate. By converting the Li into soluble Li salt, the Li can be specifically dissolved. The remainder remains solid. The Li can then be separated from the solids by liquid-solid separation. The solid fraction includes graphite as well as Ni, Co, Cu, Al, Fe and Mn. A black mass residue is obtained by removing the graphite (carbon fraction) from the solid fraction. The order of lithium and graphite extraction can also be reversed. The black mass residue includes Ni, Co, Cu, Al, Fe and Mn, and can be further processed to separate them from each other. In the example of Fig. 1, a liquid fraction of Cu, Al and Fe can be obtained by leaching and separated from Ni, Co and Mn by diverse methods like cementation, precipitation and solvent extraction. Co-Mn chromatography allows to separate a Ni-containing fraction from a fraction containing Mn and Co. These can be further processed to recover Ni, Mn and Co in the form of the corresponding sulfates.

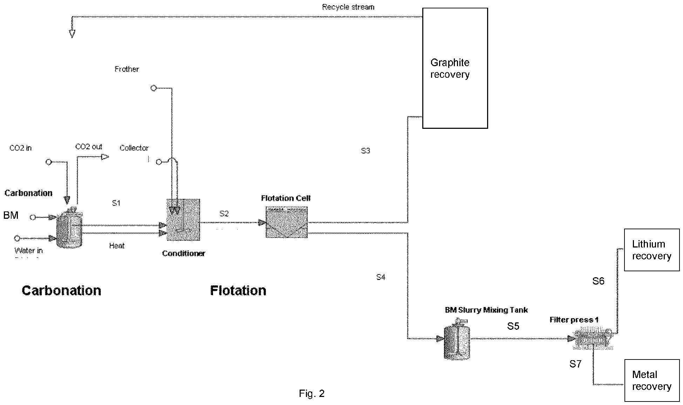

As shown in more detail in Figs. 2 to 10, according to an exemplary process, graphite is separated from BM, and Li is crystallized as carbonate salt. The fraction from which Li and graphite are taken is transferred to the leaching area. Here, it is leached in an oxygenated environment with the help of diluted sulfuric acid. After the leaching process, solid and liquid separation is made with the help of filtration. The liquid is first subjected to the cementation process. Thus, the Cu is precipitated as cement copper. The solution is then separated from its iron content in the iron removal area. This solution, which is barren in Cu and Fe, is fed to the Al solvent extraction unit to remove the remaining Al. Then, by passing through the Co-Mn solvent extraction unit, Ni and Co-Mn are separated. The Ni solution obtained is purified from the impurities in it by passing through the ion exchange columns and is fed to the crystallization and precipitated as sulfate salt. Solution containing Co and Mn is fed to Mn solvent extraction units. Here, the Co raffinate solution passes through ion exchange columns and impurities are removed. This process is further described in the following in more detail by reference to the drawings.

### 1. Froth Flotation/Carbonation

As shown in Fig 2, BM first goes through carbonization and flotation steps. This results in a fraction enriched in graphite (S3) and a fraction enriched in lithium and metals (S4). After slurring fraction S4 in a mixing tank, the slurry S5 is filtered (filter press 1). Thereby, a lithium-enriched fraction S6 is separated from a metal-enriched fraction S7 (also referred to herein as "enriched black mass"). Fraction S6 can then be subjected to Li recovery and fraction S7 can be subjected to metal recovery.

Carbonation is based on using carbon dioxide (CO₂) to convert the solid phase lithium oxides in BM to water soluble compounds in fraction S1. In the BM hydrometallurgical chain, this eliminates the need for lithium removal in later steps and improves the overall recovery rates of lithium as it prevents issues typically seen such as co-extraction at various stages. Process water and BM is adjusted to a solid concentration of approx. 100 to 15o gpl without adjustment of the pH value.

The carbonized fraction S1 is fed to a conditioning reactor step before, simultaneously or after flotation.

Slurry density is measured by marcy scale. In the condition reactor water soluble lithium species like lithium hydroxide (LiOH), lithium carbonate (Li₂CO₃) and the different lithium metal oxides (LiMOx) start to dissolve according to reaction 1:

LiOH + H₂O → Li⁺ (aq) + OH⁻ (aq) (1)

Li₂CO₃ + H₂O → 2Li⁺ (aq) + HCO³⁻ (aq) + H⁺ (2)

LiMO + H₂O → Li⁺ (aq) + MOH (s) (3)

Slurry retention time in the conditioner is approximately 0.5 h to be evenly mixed with the collector-frother emulsion. Slurry S2 from the conditioner is pumped to the flotation cell or vice versa in case of first graphite recovery.

The flotation is executed in a flotation cell equipped with an agitator. Air and/or CO₂ is fed to ensure proper graphite quality and convert the lithium to lithium carbonate. Graphite is floated and collected in a tank (fraction S3). Flotation duration is around 20 min.

Slurry S4 from the flotation is stored in an agitated filter feed tank. The slurry S5 from the filter feed tank is pumped continuously to filtration (filter press 1). A filter press is used to separate the flotation residue (S7) and lithium enriched solution (S6). The lithium enriched solution (S6) may be collected in a tank for lithium recovery treatment. It contains lithium in the form of dissolved lithium carbonate.

### 2. Lithium Recovery

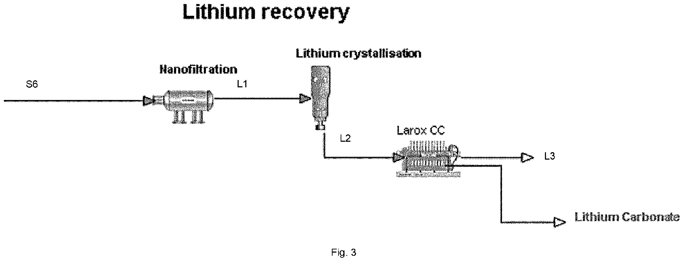

Fig. 3 illustrates an exemplary approach for Li recovery. To this end, the Li-enriched solution S6 is fed to a high pressure nanofiltration unit for separation of Li from any remaining solids, as well as larger and multivalent ions. The filtrate L1 is guided to evaporative crystallization. The required time for crystallization is approx. 2 to 3h. Crystallization yields a Li carbonate containing fraction L2. If desired, fraction L2 can be further purified, for instance by means of filtration, yielding the product Li carbonate.

An exemplary product has the following impurities:
Al: 0.0001-0.001%; Ca: 0.0005-0.04%; Ni: 0.0001%; F: 0.0021%; Cu: 0.0001-0.001%;
Fe: 0.0001-0.001%; K: 0.001%; Mg: 0.0001-0.01%; Mn: 0.0001%; Na: 0.003-0.05%; Pb: 0.0001%; Si: 0.0005%; Zn: 0.0001-0.001%; Cl: 0.0014-0.015%; SO4²⁻: 0.01-0.066%.

### 3. Graphite Recovery

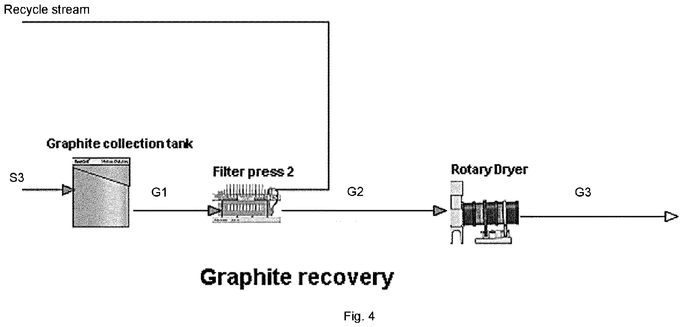

Fig. 4 illustrates an exemplary graphite recovery approach from fraction S3, accumulating in the froth in the flotation step. The graphite-containing froth is collected in a graphite collection tank. From there, fraction G1 is subjected to filtering and drying yielding fractions G2 and G3, respectively.

### 4. Leaching

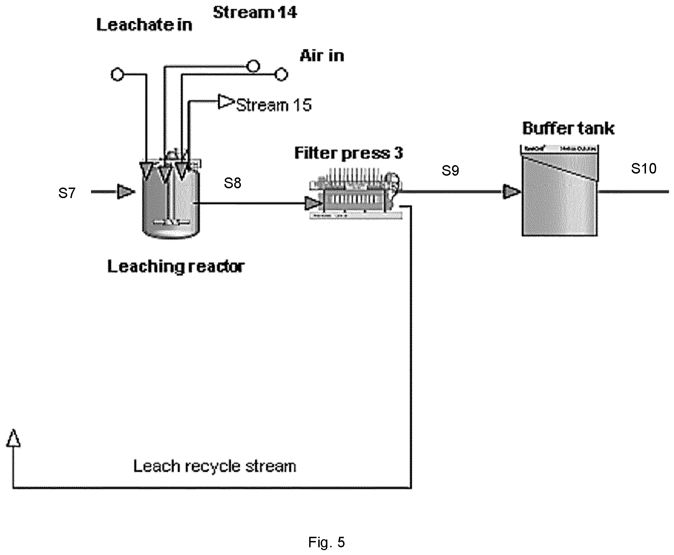

As shown in Fig. 5, the Green Mass (S7) can be leached in a reactor in order to dissolve metals into the solution. The leaching can be conducted at 70 to 80 °C and 1 atm condition. The temperature in the leaching reactor can be maintained with a heat element. Diluted sulfuric acid and air and/or oxygen are fed to the reactor to provide the necessary oxidative conditions during reaction. A sulfuric acid concentration of 2 to 3 M is required and loaded at 20 to 25 % wt. The residence time in the leaching reactor is approximately 2 to 2.5 h. Metals are leached according to reaction 2:

MeO(s) + 2H⁺ (aq) → Me²⁺ (aq) +H₂O (I) (2)

Me = Cu, Co, Ni, Mn, Fe, etc.

After leaching, the leached slurry S8 is guided from the leaching reactor to a filter feed tank equipped with an agitator. Filtration is carried out in a two chamber filter press (Filter press 3). Slurry from the feed tank is pumped constantly through the filter chambers. When the filtration cycle is over, the filter cake (Leach recycle stream) may be recycled to the leaching reactor, or disposed as it contains mostly undissolved minerals such as Si and entrained unseparated graphite from the previous step. The acidic filtrate S9 is called pregnant leach solution (PLS) and may be collected in a tank for further use as it contains metals. In this example the filtrate S10 is guided from the tank to copper recovery.

### 5. Copper Cementation

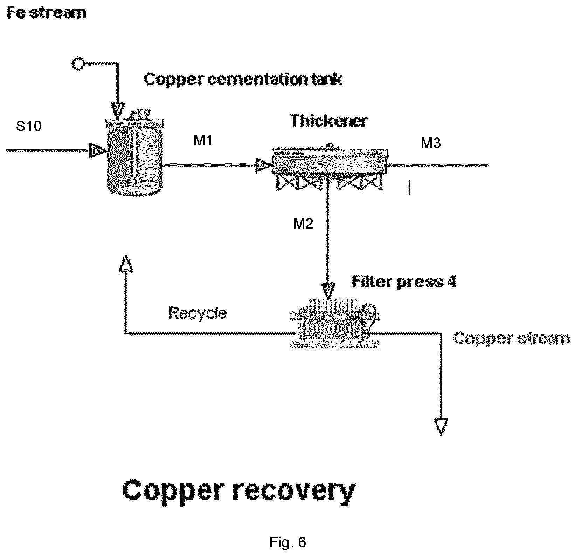

Fig. 6 shows an exemplary copper recovery step by copper cementation. To this end, the fraction S10 (PLS) is guided into a copper cementation tank at 60 °C and a pH value of 1 to 1.50, where iron powder is added simultaneously. The retention time is approximately 20 min. In this time copper ions react with the iron powder.

The chemical reaction between copper and iron is given as follows:

Fe(s) + Cu²⁺ → Fe²⁺ + Cu(s) (3)

After the reaction, the slurry M1 with the precipitated Cu is sent to a thickener/settler for solid/liquid separation. At the bottom of the thickener/Settler, copper cement precipitates and can be separated from the solution. The precipitate M2 is filtered continuously, whereby the filtrate may be recycled to the cementation reactor and copper can be recovered from the retentate. The liquid phase (raffinate) M3 obtained from the thickener may be subjected to iron removal.

### 7. Iron Removal

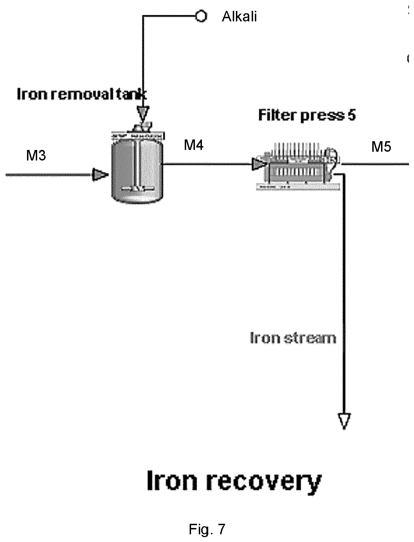

An exemplary iron removal step is illustrated in Fig. 7. Here, copper depleted raffinate M3 from copper cementation is fed to iron precipitation. To this end, the raffinate M3 is conditioned by adding alkali solution to precipitate iron. Iron precipitation is carried out at a temperature of 50 °C. Calcium hydroxide is used as a precipitating agent to keep the pH between 1.5 and 3.5. Further, low-pressure air is fed to oxidize ferrous iron to ferric iron. The residence time in iron precipitation is approx. 2 h. Iron precipitation reaction is shown in equation (4).

Fe³⁺ + 3H₂O → Fe(OH)₃(s) + 3H⁺ (4)

The precipitated iron containing slurry M4 from the iron removal tank is fed to a press filter (filter press 5). The retentate is enriched in iron, whereas the filtrate M5 in turn may be sent to aluminum recovery.

### 8. Aluminum Recovery

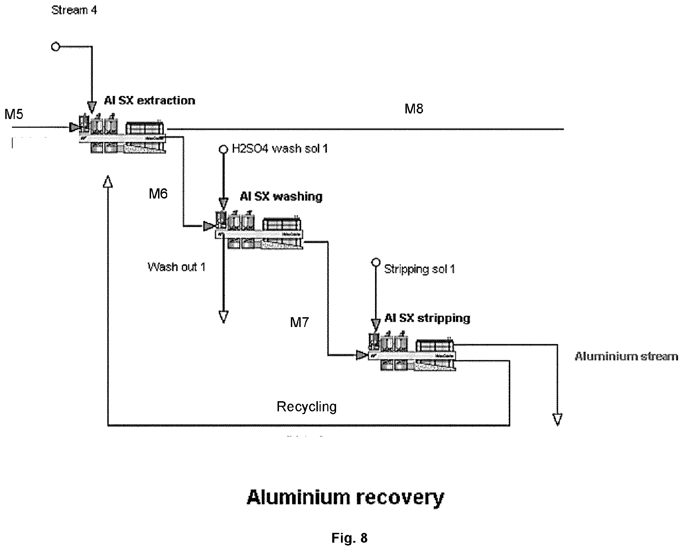

Referring to Fig. 8, an exemplary aluminum recovery by aluminum solvent extraction is shown. The aluminum solvent extraction uses extraction and stripping. The solvent extraction reaction can be described as shown in equation (5):

Me²⁺(aq) + 2RH(org) → MeR₂(org) + 2H⁺(aq) (5)

By using aluminum selective organic reagent (Cyanex-272) dissolved in kerosene type diluent, the aluminum is selectively extracted from fraction M5 into the organic phase, which flows counter current to fraction M5. The pH during extraction is controlled between 1 and 1.5. To this end, an alkali solution (NaOH/Na₂CO₃) can be added to each extraction stage. The loaded organic phase M6 continues to a washing stage. Here, the loaded organic phase obtained from the extraction is chemically washed. In particular, manganese and cobalt are washed off from the organic phase with diluted sulfuric acid solution. Used wash solution may be recycled to the extraction stage. The aluminum is stripped from the washed organic phase M7 by pH stripping, where the fraction M7 flows counter current to the stripping agent. Diluted sulfuric acid may be used as a stripping agent and can be added to all stripping stages to control the pH profile. The stripped solution contains aluminum in the form of aluminum sulfate, which may be separated from liquid by crystallization. An evaporative crystallizer may be used for this purpose.

### 9. Cobalt/Manganese Enrichment and Nickel Separation

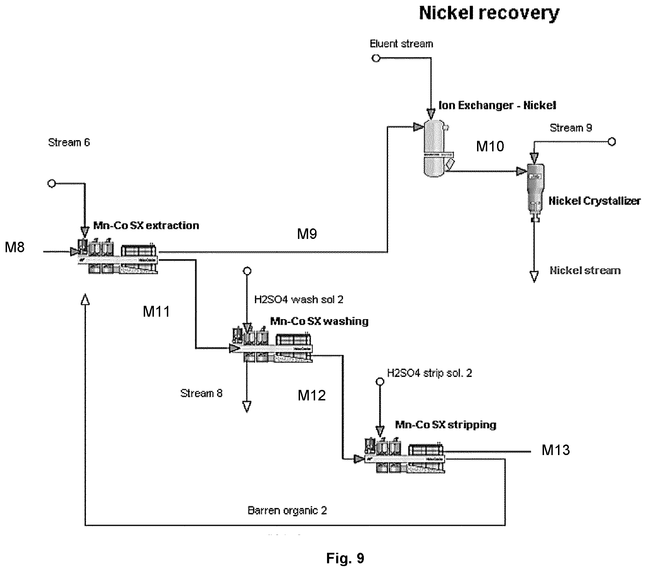

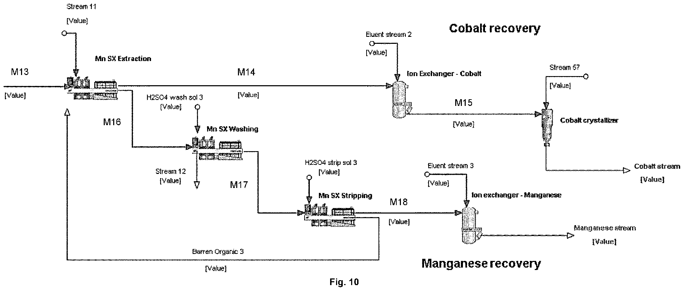

As shown in Figs. 9 and 10, manganese/cobalt may be recovered from the raffinate M8 obtained in the aluminum extraction step. To this end, the raffinate M8 goes through cobalt/manganese solvent extraction. Cobalt/manganese solvent extraction is based on extraction, washing and stripping, yielding fractions M11, M12 and M13, respectively (Fig. 9).

The raffinate M8 is fed to one or more extraction stages. Using manganese selective reagent (Cyanex 272) dissolved in kerosene type diluent, cobalt/manganese is extracted into the organic phase. An alkali (NaOH/Na₂CO₃) solution is added to the extraction to keep the pH between 3.8 and 4.5. The organic phase flows counter currently to the raffinate M8.

The cobalt and manganese depleted solution M9 may be subjected to cobalt/manganese ion exchange columns to recover nickel (Fig. 9).

After extraction, the organic phase M11 is loaded with manganese and cobalt. The organic phase M11 may be washed with diluted sulfuric acid to remove impurities co-extracted into the organic phase M11. Used washing solution may be recycled to the extraction. After washing, the organic phase M12 is guided to the stripping stage. Thereby, the washed organic phase is pH-stripped with diluted sulfuric acid. The organic phase M12 flows counter current to the strip solution. Fraction M13 is enriched in cobalt and manganese, and can be further processed to separate cobalt from manganese.

### 10. Manganese and Cobalt Separation

Referring to Fig. 10, an exemplary technique to separate manganese from cobalt is based on manganese solvent extraction.

The cobalt and manganese enriched fraction M13 is guided to one or more extraction stages. Manganese is extracted into the organic phase between pH 1.8 and 3.5 using a selective organic reagent (D2EHPA) dissolved in kerosene type diluent. The organic reagent flows counter current to the fraction M13. An alkali solution (NaOH/Na₂CO₃) is used to control the pH. The obtained organic phase M16 is loaded with manganese. Co-extracted impurities may be removed from the organic phase M16 by washing. Diluted sulfuric acid solution can be used as a washing agent. Manganese can then be stripped from the washed organic phase M17 by pH-stripping. Diluted sulfuric acid can be used as a stripping agent. Further, the stripping agent may flow counter current to the organic phase M17. The stripped fraction M18 is enriched in manganese and can be sent to manganese recovery.

Cobalt is enriched in the retentate M14, which can be further processed to recover cobalt.

### 11. Manganese Recovery

With further reference to Fig. 10, residual cobalt is removed from the manganese enriched fraction M18 by cobalt ion exchange chromatography using ion exchange fixed bed column chromatography (DOW M4195/Seplite LSC495). Using fraction M18 as feed solution, cobalt ions from the feed solution are selectively adsorbed on the resin by replacing hydrogen ions (equations 6, 7), thereby being separated from the manganese enriched flow through. Moreover, the bound cobalt can be recovered from the resin by elution. The elution is carried out with concentrated sulfuric acid. The cobalt enriched eluate can be recycled for cobalt recovery. Selective binding of cobalt and/or co-elution of manganese can be prevented by tightly controlling the pH value.

### 12. Cobalt Recovery

Still referring to Fig. 10, raffinate M14 of the manganese solvent extraction is enriched in cobalt. However, residual nickel is still present as impurity. Therefore, nickel is removed from the raffinate M14 by ion exchange column chromatography (Lewatit monoplus TP220) before cobalt crystallization. Using fraction M14 as feed solution, nickel ions from the feed solution are selectively adsorbed on the resin, whereas the cobalt flows through. The bound nickel can be recovered from the resin by elution. The elution is carried out with concentrated sulfuric acid. The chromatography can be carried out in a (quasi-) continuous manner using multi column chromatography. In such a technique, the solution is fed through at least two columns in series. When a first column is fully loaded with nickel, the feed is changed to a second and a third column is connected in series as a new second column in series. To fully load the resin in the first column with nickel takes approximately 5 hours.

The nickel depleted cobalt rich flow through (M15) may be subjected to crystallization to obtain dry cobalt crystals.

### 13. Nickel Recovery

The raffinate M9 of the cobalt/manganese solvent extraction is enriched in nickel, but still contains cobalt and manganese as impurities. Therefore, residual cobalt and manganese is removed from the raffinate M9 by ion exchange chromatography (Lewatit TP272/Sun Resin LSC772) prior to nickel crystallization. Using fraction M9 as feed solution, cobalt and manganese ions from the feed solution are selectively adsorbed on the resin, whereas the nickel flows through. The bound cobalt and manganese can be recovered from the resin by elution. The elution is carried out with concentrated sulfuric acid. The chromatography can be carried out using a single column or in a (quasi-) continuous manner using multi column chromatography. The reaction mechanism on the resin can be simplified as follows:

RN +H₂SO₄ → RNH⁺ +H₂SO₄⁻ (6)

2RNH + Ni²⁺ → (RN)₂Cu²⁺ +2H⁺ (7)

The cobalt and manganese containing eluate can be recycled to the leaching reactor.

The purified nickel containing flow through (M10) may be subjected to crystallization to obtain dry nickel sulfate crystals.

## Claims

1. Process for recycling batteries, comprising the following steps:
(i) mixing black mass with a liquid to provide a black mass slurry;
(ii) converting lithium into a lithium salt in and removing graphite from the black mass slurry of step (i);
(iii) separating dissolved lithium salt from solids in the black mass slurry of step (ii) to provide a lithium-enriched liquid fraction and a lithium-depleted solid fraction;
(iv) optionally, reducing the lithium salt in the lithium-enriched liquid fraction of step (iii) to provide elementary lithium;
(v) optionally, purifying the lithium salt in the lithium-enriched liquid fraction of step (iii) or the elementary lithium of step (iv); and
(vi) optionally, solidifying the lithium salt of step (iii) or (v) or the elementary lithium of step (iv) or (v).

2. Process of claim 1, wherein the liquid in step (i) comprises or consists of water.

3. Process of claim 1 or 2, wherein the black mass is from NMC/LFP type lithium-ion batteries.

4. Process of any of claims 1 to 3, wherein the conversion into lithium salt in step (ii) involves carbonation.

5. Process of any of claims 1 to 4, wherein the removal of graphite in step (ii) involves flotation, preferably froth flotation.

6. Process of any of claims 1 to 5, wherein in step (ii) the conversion into lithium salt is conducted before, after or simultaneously with the removal of graphite.

7. Process of any of claims 1 to 6, wherein step (iii) involves liquid-solid separation, preferably filtration.

8. Process of any of claims 1 to 7, wherein step (iv) involves electrowinning.

9. Composition comprising lithium obtained or obtainable by a process as defined in any of claims 1 to 8.

10. Composition of claim 9, wherein the purity is more than 75 %, preferably more than 98%, more preferably more than 99%, most preferably more than 99.5%.

11. Composition of claim 9 or 10, wherein the composition further contains at least one, at least two, at least three, at least four, at least five, at least six, at least seven, at least eight, at least nine, at least ten, at least eleven, or all, elements selected from the group consisting of Al, B, Ba, Ca, F, Cu, Fe, K, Mg, Na, P and S.

12. Composition of claim 11, wherein the amount of Al in the composition is at least 0.00001%, or at least 0.0001%, and/or at most 0.05%, or at most 0.005%; and/or
wherein the amount of B in the composition is at least 0.00006%, or at least 0.0006%, and/or at most 0.01%, or at most 0.001%; and/or
wherein the amount of Ba in the composition is at least 0.00002%, or at least 0.0002%, and/or at most 0.01%, or at most 0.001%; and/or
wherein the amount of Ca in the composition is at least 0.00005%, or at least 0.0005%, and/or at most 5.4%, or at most 0.54%; and/or
wherein the amount of F in the composition is at least 0.00021%, or at least 0.0021%, and/or at most 10%, or at most 1%; and/or
wherein the amount of Cu in the composition is at least 0.000002%, or at least 0.00002%, and/or at most 0.1%, or at most 0.01%; and/or
wherein the amount of Fe in the composition is at least 0.001%, or at least 0.0001%, and/or at most 0.58%, or at most 0.058%; and/or
wherein the amount of K in the composition is at least 0.00003%, or at least 0.0003%, and/or at most 15.7%, or at most 1.57%; and/or
wherein the amount of Mg in the composition is at least 0.00001%, or at least 0.0001%, and/or at most 4.7%, or at most 0.47%; and/or
wherein the amount of Na in the composition is at least 0.0003%, or at least 0.003%, and/or at most 84%, or at most 8.4%; and/or
wherein the amount of P in the composition is at least 0.0004%, or at least 0.001%, and/or at most 0.04%, or at most 0.01%; and/or
wherein the amount of S in the composition is at least 0.02%, or at least 0.1%, and/or at most 2%, or at most 0.4%.

13. Composition of any of claims 9 to 12, wherein the composition further contains at least one, at least two, at least three, at least four, at least five, or all, elements selected from the group consisting of Ba, Co, Ni, Mn, Si and Zn.

14. Composition of claim 13, wherein the amount of Ba in the composition is at least 0.00005%, or at least 0.0001%, and/or at most 0.005%, or at most 0.001%; and/or
wherein the amount of Co in the composition is at least 0.001%, or at least 0.005%, and/or at most 0.1%, or at most 0.05%; and/or
wherein the amount of Ni in the composition is at least 0.000003%, or at least 0.00003%, and/or at most 0.2%, or at most 0.02%; and/or
wherein the amount of Mn in the composition is at least 0.000005%, or at least 0.00005%, and/or at most 4%, or at most 0.4%; and/or
wherein the amount of Si in the composition is at least 0.00005%, or at least 0.0005%, and/or at most 3%, or at most 0.3%ranges from 0.00005 to 3, preferably 0.0005 to 0.3; and/or
wherein the amount of Zn in the composition is at least 0.000004%, or at least 0.00004%, and/or at most 0.01%, or at most 0.001%.

15. Composition comprising Co, Ni, Cu, Al and Fe, obtained or obtainable as the lithium-depleted solid fraction in step (iii) of the process of claim 1.
